# EUROPEAN PATENT APPLICATION

(11) **EP 2 320 271 A1**
(43) Date of publication of application: **11.05.2011**
(21) Application number: 10014377.5
(22) Date of filing: 08.11.2010
(51) Int. Cl.: G02F 1/1347, G09G 3/36

(54) **Display including a plurality of display panels**

(30) Priority: 09.11.2009 JP 2009255911
(71) Applicant: Sanyo Electric Co., Ltd., Osaka 570-8677 (JP)
(72) Inventor: Kitamori, Yutaka, Moriguchi-shi Osaka 570-8677 (JP)
(74) Representative: Glawe, Delfs, Moll

(57) **Abstract**

A display apparatus includes a first liquid crystal display panel 1, a second liquid crystal display panel 2 arranged on a rear side of the first liquid crystal display panel 1, and control means 5 for causing an image to be displayed on the first and second liquid crystal display panels 1, 2, and the image display means 5 includes a first image display part 51 that causes a first image comprising a low density part having a low density value and a high density part having a higher density value than the low density part to be displayed on the first liquid crystal display panel 1, and a second image display part 52 that causes a second image comprising a low density part having a low density value and a high density part having a higher density value than the low density part to be displayed on the second liquid crystal display panel 2. When an image is observed from within a predetermined angular range with respect to a front surface of the first liquid crystal display panel 1, the first and second images overlap each other to produce a predetermined composite image.

## Description

### BACKGROUND OF THE INVENTION

The present invention relates to a display apparatus including two or more liquid crystal display panels are layered.

Conventionally, a display apparatus including a liquid crystal display panel is applied to a device which needs to display images, such as ATM (Automated Teller Machine). In the liquid crystal display panel, it is possible to narrow its view angle so that an image can be viewed only within a predetermined angular range. Therefore, it is beneficial to employ a display apparatus including a liquid crystal display panel in a device such as ATM which displays an image for inputting a number or letter which is highly confidential such as an identification number in particular, since the confidentiality of the inputting numbers or letters are maintained.

On the other hand, in a device such as ATM, when no operation is performed by a user, an image such as advertisement can be displayed by the display apparatus. Here, it is preferable that such image is viewable in a wide angular range with respect to a front surface of the liquid crystal display panel. However, if the image is viewable in a wide angular range, when a user of the ATM inputs an identification number, the identification number may be recognized by a person other than the user.

In recent years, it has been proposed to employ the display apparatus including a two-layered liquid crystal display panels in a device such as ATM. According to the apparatus, it is possible to display an image having various visual effects.

In such a display apparatus, it is possible to display an image including information highly confidential in a back side panel out of the two liquid crystal display panels by making its view angle narrow, and to display an image of an advertisement in the front side panel by making its view angle broad.

However, in the above described display apparatus, since the image which should be viewable in wide angular range can be displayed only on the front side liquid crystal display panel, visual effect of the image decreases.
Also, in recent years, in a device such as ATM, a further reliable maintenance of confidentiality of the identification number or the like is required.

### SUMMARY OF THE INVENTION

A display apparatus according to the present invention comprises a first liquid crystal display panel, a second liquid crystal display panel arranged on a rear side of the first liquid crystal display panel, and a control unit that controls display of an image on the first liquid crystal display panel and the second liquid crystal display panel. The control unit includes a first image display part that causes a first image comprising a low density part having a low density value and a high density part having a higher density value than the low density part to be displayed on the first liquid crystal display panel, and a second image display part that causes a second image comprising a low density part having a low density value and a high density part having a higher density value than the low density part to be displayed on the second liquid crystal display panel. When an image is observed from within a predetermined angular range with respect to a front surface of the first liquid crystal display panel, the first image displayed on the first liquid crystal display panel and the second image displayed on the second liquid crystal display panel overlap each other to produce a predetermined composite image.

### BRIEF DESCRIPTION OF THE DRAWINGS

FIG. 1 is an exploded perspective view of a display apparatus in accordance with an embodiment of the present invention;
FIG. 2 is a block diagram which shows a structure of the display apparatus;
FIG. 3a shows a first image for producing a predetermined composite image representing a number zero;
FIG. 3b shows a second image for producing the predetermined composite image representing a number zero;
FIG. 3c shows the predetermined composite image representing a number zero;
FIG. 4a shows a first image for producing a predetermined composite image representing a number one;
FIG. 4b shows a second image for producing the predetermined composite image representing a number one;
FIG. 4c shows the predetermined composite image representing a number one;
FIG. 5a shows a first image for producing a predetermined composite image representing a number two;
FIG. 5b shows a second image for producing the predetermined composite image representing a number two;
FIG. 5c shows the predetermined composite image representing a number two;
FIG. 6a shows a first image for producing a predetermined composite image representing a number three;
FIG. 6b shows a second image for producing the predetermined composite image representing a number three;
FIG. 6c shows the predetermined composite image representing a number three;
FIG. 7a shows a first image for producing a predetermined composite image representing a number four;
FIG. 7b shows a second image for producing the predetermined composite image representing a number four;
FIG. 7c shows the predetermined composite image representing a number four;
FIG. 8a shows a first image for producing a predetermined composite image representing a number five;
FIG. 8b shows a second image for producing the predetermined composite image representing a number five;
FIG. 8c shows the predetermined composite image representing a number five;
FIG. 9a shows a first image for producing a predetermined composite image representing a number six;
FIG. 9b shows a second image for producing the predetermined composite image representing a number six;
FIG. 9c shows the predetermined composite image representing a number six;
FIG. 10a shows a first image for producing a predetermined composite image representing a number seven;
FIG. 10b shows a second image for producing the predetermined composite image representing a number seven;
FIG. 10c shows the predetermined composite image representing a number seven;
FIG. 11a shows a first image for producing a predetermined composite image representing a number eight;
FIG. 11b shows a second image for producing the predetermined composite image representing a number eight;
FIG. 11c shows the predetermined composite image representing a number eight;
FIG. 12a shows a first image for producing a predetermined composite image representing a number nine;
FIG. 12b shows a second image for producing the predetermined composite image representing a number nine;
FIG. 12c shows the predetermined composite image representing a number nine;
FIG. 13 shows an example of a predetermined composite image displayed on a display apparatus employed in an ATM;
FIG. 14 shows a first image displayed on a first liquid crystal display panel of the display apparatus employed in the ATM;
FIG. 15 shows a second image displayed on a second liquid crystal display panel of the display apparatus employed in the ATM;
FIG. 16 is a block diagram showing a structure of a display apparatus in accordance with a first modification of the present invention;
FIG. 17a shows a first image displayed on a first liquid crystal display panel of a display apparatus in accordance with a second modification of the present invention;
FIG. 17b shows a second image displayed on a second liquid crystal display panel of the display apparatus in accordance with the second modification;
FIG. 17c shows a predetermined composite image produced by the first image and the second image in the display apparatus in accordance with the second modification;
FIG. 18a explains angular range in which the predetermined composite image can be seen;
FIG. 18b explains positional relation between the first image and the second image for producing the predetermined composite image;
FIG. 19a explains angular range in which the predetermined composite image can be seen;
FIG. 19b explains positional relation between the first image and the second image for producing the predetermined composite image;
FIG. 20a explains angular range in which the predetermined composite image can be seen;
FIG. 20b explains positional relation between the first image and the second image for producing the predetermined composite image;
FIG. 21 is a block diagram showing a structure of a display apparatus in accordance with a third modification of the present invention; and
FIG. 22 shows an example of a predetermined composite image displayed on the display apparatus in accordance with the third modification.

### DETAILED DESCRIPTION OF THE PREFERRED EMBODIMENT

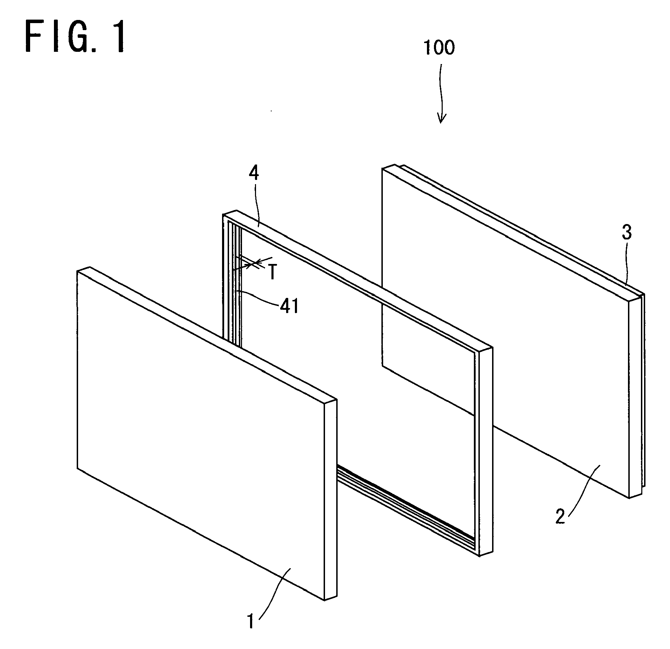

Preferred embodiments of the present invention are described in detail below with reference to the drawings. As shown in FIG. 1, a display apparatus 100 in accordance with an embodiment of the present invention comprises a first liquid crystal display panel 1, a second liquid crystal display panel 2 arranged on a rear side of the panel 1, and a backlight unit 3 arranged on a rear side of the panel 2.

The backlight unit 3 includes a light source illuminating the first and second panels 1, 2 from the rear side of the panel 2. In order to display an image on the panels 1, 2, the light of the unit 3 which comes from the rear side is utilized.

The panels 1, 2 each comprise a pair of glass plates including liquid crystal therebetween, and two polarizing plates having polarization directions perpendicular to each other provided on both sides of the pair of glass plates. By controlling orientation of the liquid crystal for every pixel, the panels 1, 2 can display an image comprising a low density part having a low density value where the light from the backlight unit 3 penetrates and a high density part having a high density value where the light from the unit 3 is blocked.

As shown in FIG. 1, the panels 1, 2 are fitted in a frame body 4, and a spacer 41 intervening between the panels 1, 2 projects on an inner surface of the frame body 4. The panels 1, 2 are thereby arranged so as to be spaced apart from each other by a thickness dimension T of the spacer 41. Accordingly, by adjusting the thickness dimension T of the spacer 41, a distance between the panels 1, 2 can be adjusted.

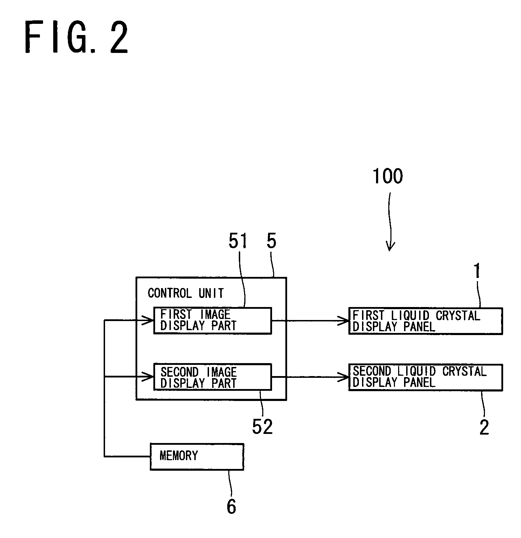

As shown in FIG. 2, the display apparatus 100 further includes a control unit 5 causing an image to be displayed on the panels 1, 2. The control unit 5 includes a first image display part 51 causing an image to be displayed on the panel 1 and a second image display part 52 causing an image to be displayed on the panel 2. As for the control unit 5, an IC (Integrated Circuit) or an LSI (Large Scale Integration) can be employed, for example.

According to the display apparatus 100, a composite image in which an image displayed on the panel 1 and an image displayed on the panel 2 are overlapped each other is generated when it is observed from the front side of the panel 1. Thereby, a user of the display apparatus 100 can view images having various visual effects, e.g. a three-dimensional image.

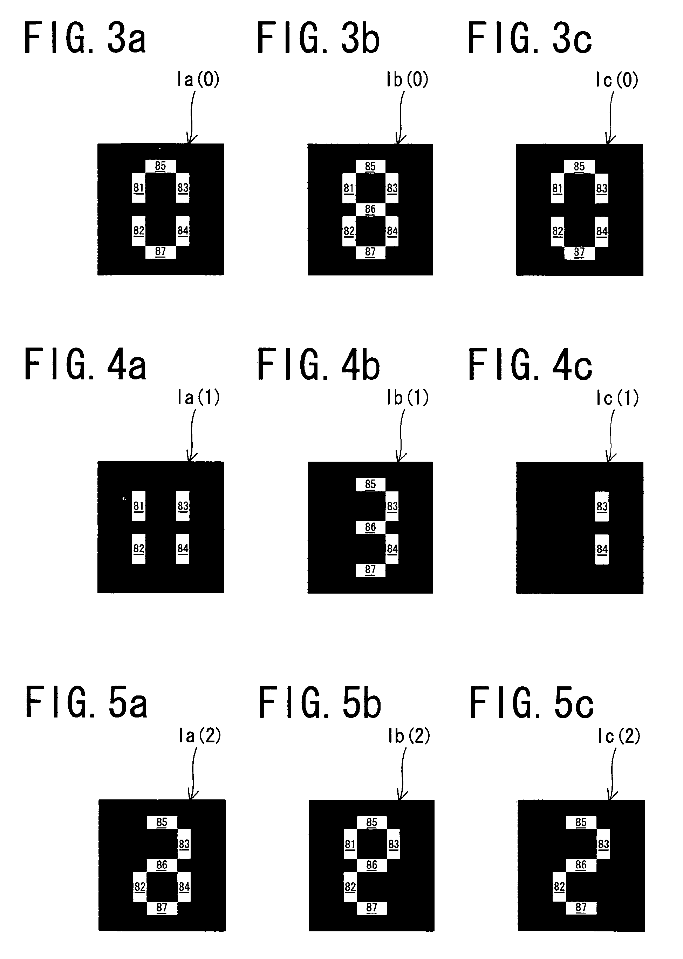

Further, the display apparatus 100 can produce not only the three-dimensional composite image but also a predetermined planar composite image. As shown in FIGS. 3c to 12c, the display apparatus 100 according to the present embodiment can produce a predetermined composite image Ic(n) (n is a number representing an image pattern) comprising an image pattern part and a background part. The image pattern part is formed by the low density part having a low density value and includes an image pattern representing any one of numbers zero to nine, while the background part is formed by the high density part having a higher density value than the low density part and surrounds the image pattern part. In this embodiment, the low density part is displayed by white color, and the high density part is displayed by black color.

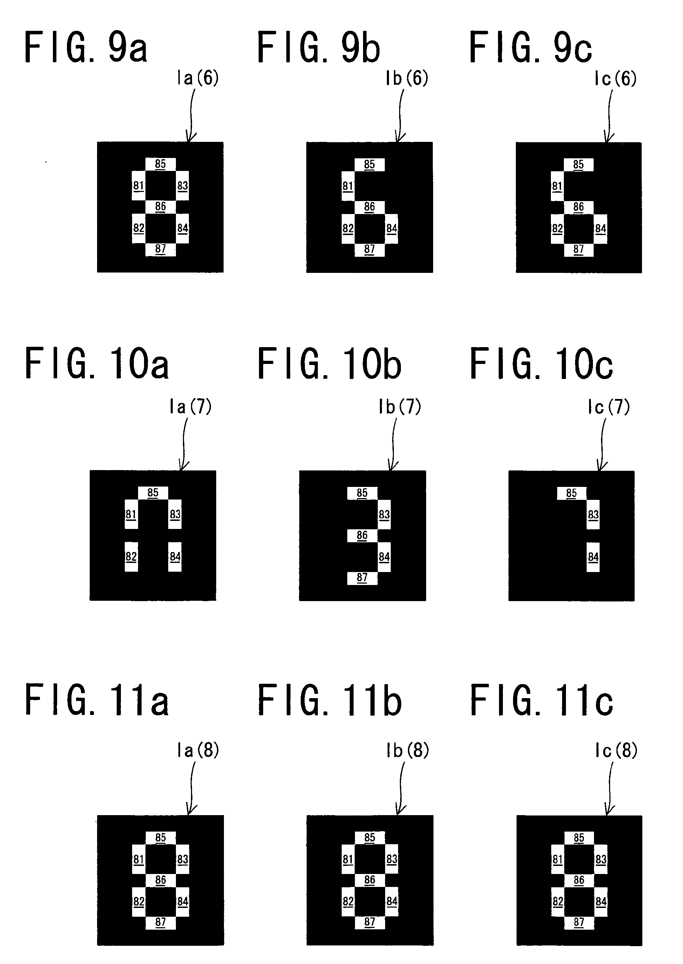

The image pattern part of the image Ic(n) is formed by rectangular pattern portions selected from seven rectangular pattern portions 81-87 (cf. FIG. 11c), wherein the portion forms a figure of letter "8". Two portions 81 and 82, located at upper and lower positions respectively on the left side of the seven portions 81-87, and two portions 83 and 84, located at upper and lower positions respectively on the right side of the seven portions 81-87, extend in a longitudinal direction. On the other hand, three portions 85, 86 and 87 located at upper, middle and lower positions respectively on the center at the seven portions 81-87 extend in a lateral direction.

Specific description is provided below.
As shown in FIG. 3c, the image pattern part of a predetermined composite image Ic(0) representing a number zero is formed by the portion 81 located at the left upper position, the portion 82 located at the left lower position, the portion 83 located at the right upper position, the portion 84 located at the right lower position, the portion 85 located at the central upper position, and the portion 87 located at the central lower position.

As shown in FIG. 4c, the image pattern part of a predetermined composite image Ic(1) representing number "one" is formed by the portion 83 and the portion 84.

As shown in FIG. 5c, the image pattern part of a predetermined composite image Ic(2) representing number "two" is formed by the portion 82, the portion 83, the portion 85, the portion 86, and the portion 87.

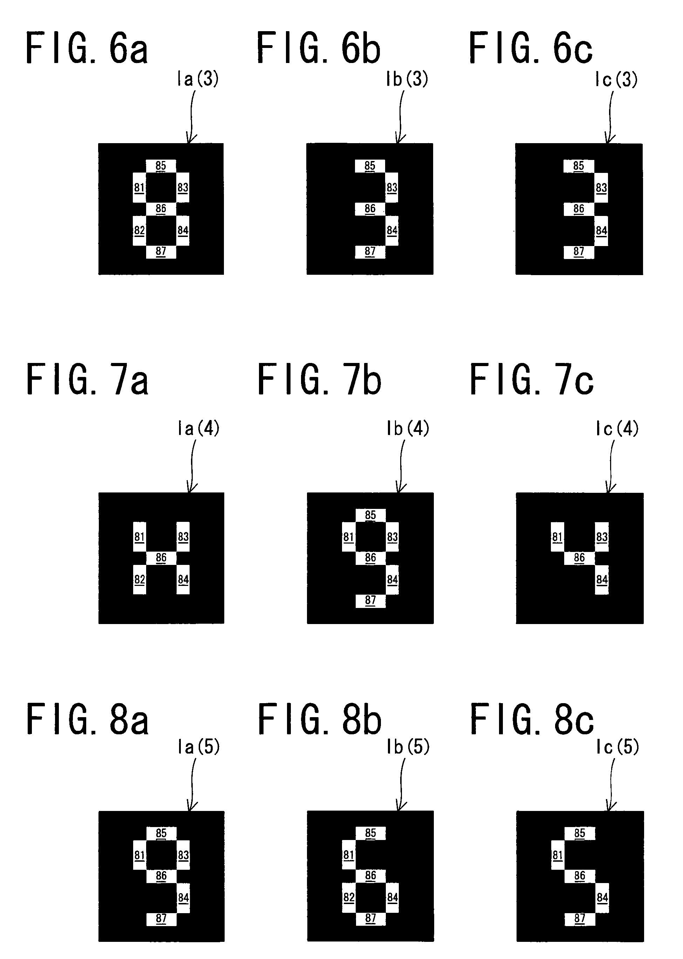

As shown in FIG. 6c, the image pattern part of a predetermined composite image Ic(3) representing number "three" is formed by the portion 83, the portion 84, the portion 85, the portion 86, and the portion 87.

As shown in FIG. 7c, the image pattern part of a predetermined composite image Ic(4) representing number "four" is formed by the portion 81, the portion 83, the portion 84, and the portion 86.

As shown in FIG. 8c, the image pattern part of a predetermined composite image Ic(5) representing number "five" is formed by the portion 81, the portion 84, the portion 85, the portion 86, and the portion 87.

As shown in FIG. 9c, the image pattern part of a predetermined composite image Ic(6) representing number "six" is formed by the portion 81, the portion 82, the portion 84, the portion 85, the portion 86, and the portion 87.

As shown in FIG. 10c, the image pattern part of a predetermined composite image Ic(7) representing number "seven" is formed by the portion 83, the portion 84, and the portion 85.

As shown in FIG. 11c, the image pattern part of a predetermined composite image Ic(8) representing number "eight" is formed by the portion 81, the portion 82, the portion 83, the portion 84, the portion 85, the portion 86, and the portion 87.

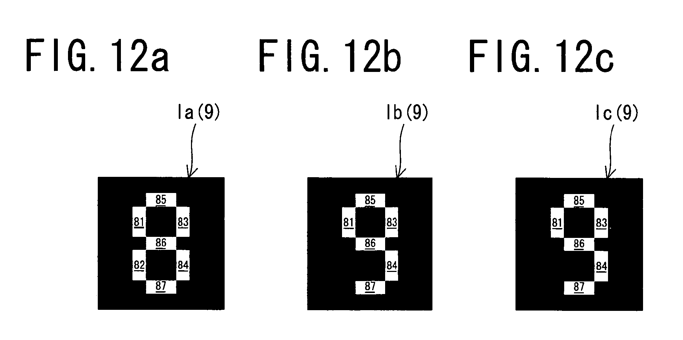

As shown in FIG. 12c, the image pattern part of a predetermined composite image Ic(9) representing number "nine" is formed by the portion 81, the portion 83, the portion 84, the portion 85, the portion 86, and the portion 87.

When the above described images Ic(n) representing numbers are produced, the first and second image display parts 51, 52 display a first image Ia(n) (cf. FIG. 3a to FIG. 12a) and a second image Ib(n) (cf. FIG. 3b to FIG. 12b) for producing the image Ic(n) on the panels 1, 2, respectively.

As shown in FIG. 2, the display apparatus 100 further includes a memory 6, and the image Ia(n) and the image Ib(n) which produce the image Ic(n) are recorded in the memory 6 correlated with each other. When displaying the image Ia(n) and the image Ib(n) on the respective panels 1, 2, the first image display part 51 and the second image display part 52 read out the correlated images Ia(n) and Ib(n) from the memory 6, and display the images Ia(n) and Ib(n) on the respective panels 1, 2.

The image Ia(n) has an image pattern part which is formed by a low density part having a low density value, and a background part which is formed by the high density part having a higher density value than the low density part surrounding the image pattern part. The image pattern part includes an image pattern of the image Ic(n). Also, the image Ib(n) comprises an image pattern part which is formed by the low density part having a low density value, and a background part which is formed by the high density part having a higher density value than the low density part surrounding the image pattern part. The image pattern part includes an image pattern of the image Ic(n). In this embodiment, the low density part is displayed by white color, and the high density part is displayed by black color.

An image pattern part of at least one of the image Ia(n) and the image Ib(n) includes a dummy image pattern part which does not form the image Ic(n), and the dummy image pattern part overlaps the background part of the image Ia(n) or the image Ib(n).

Examples of the image Ia(n) and the image Ib(n) are shown in FIGS. 3a to 12a and FIGS. 3b to 12b, respectively.
When generating the image Ic(0) representing number "zero", as shown in FIG. 3a, the low density part (image pattern part) of the image Ia(0) is formed by rectangular pattern portions (i.e. portions 81, 82, 83, 84, 85 and 87) forming the same image pattern (number zero) as the image pattern that should be included in the image Ic(0). Also, as shown in FIG. 3b, the low density part (image pattern part) of the image Ib(0) is formed by rectangular pattern portions (i.e. portions 81, 82, 83, 84, 85 and 87) forming the same image pattern (number zero) as the image pattern that should be included in the image Ic(0) and a dummy image pattern part formed by the portion 86.
Therefore, the image Ia(0) has an image pattern representing number zero, and the image Ib(0) has an image pattern representing number eight. Thereby, the image pattern included in the image Ib(0) is set to a different image pattern from the image pattern that is included in the image Ic(0).

When generating the image Ic(1) representing number "one", as shown in FIG. 4a, the low density part (image pattern part) of the image Ia(1) is formed by rectangular pattern portions (i.e. portions 83 and 84) forming the same image pattern (number one) as the image pattern that should be included in the image Ic(1) and dummy image pattern parts formed by the portion 81 and the portion 82. Also, as shown in FIG. 4b, the low density part (image pattern part) of the image Ib(1) is formed by rectangular pattern portions (i.e. portions 83 and 84) forming the same image pattern (number one) as the image pattern that should be included in the image Ic(1) and dummy image pattern parts formed by the portion 85, the portion 86, and the portion 87.
Therefore, the image Ia(1) has an image pattern representing number eleven, and the image Ib(1) has an image pattern representing number three. Thereby, the image patterns included in the image Ia(1) and the image Ib(1) are set to different image patterns from the image pattern that is included in the image Ic(1).

When generating the image Ic(2) representing number "two", as shown in FIG. 5a, the low density part (image pattern part) of the image Ia(2) is formed by rectangular pattern portions (i.e. portions 82, 83, 85, 86 and 87) forming the same image pattern (number two) as the image pattern that should be included in the image Ic(2) and a dummy image pattern part formed by the portion 84. Also, as shown in FIG. 5b, the low density part (image pattern part) of the image Ib(2) is formed by rectangular pattern portions (i.e. portions 82, 83, 85, 86 and 87) forming the same image pattern (number two) as the image pattern that should be included in the image Ic(2) and a dummy image pattern part formed by the portion 81.
Therefore, the image Ia(2) has an image pattern representing a diagram of laterally-reversed number six, and the image Ib(2) has an image pattern representing a diagram of laterally-reversed number nine. Thereby, the image patterns included in the image Ia(2) and the image Ib(2) are set to different image patterns from the image pattern that is included in the image Ic(2).

When generating the image Ic(3) representing number "three", as shown in FIG. 6a, the low density part (image pattern part) of the image Ia(3) is formed by rectangular pattern portions (i.e. portions 83, 84, 85, 86 and 87) forming the same image pattern (number three) as the image pattern that should be included in the image Ic(3) and dummy image pattern parts formed by the portion 81 and the portion 82. Also, as shown in FIG. 6b, the low density part (image pattern part) of the image Ib(3) is formed by rectangular pattern portions (i.e. portions 83, 84, 85, 86 and 87) forming the same image pattern (number three) as the image pattern that should be included in the image Ic(3).
Therefore, the image Ia(3) has an image pattern representing number eight, and the image Ib(3) has an image pattern representing number three. Thereby, the image pattern included in the image Ia(3) is set to a different image pattern from the image pattern that is included in the image Ic(3).

When generating the image Ic(4) representing number "four", as shown in FIG. 7a, the low density part (image pattern part) of the image Ia(4) is formed by rectangular pattern portions (i.e. portions 81, 83, 84 and 86) forming the same image pattern (number four) as the image pattern that should be included in the image Ic(4) and a dummy image pattern part formed by the portion 82. Also, as shown in FIG. 7b, the low density part (image pattern part) of the image Ib(4) is formed by rectangular pattern portions (i.e. portions 81, 83, 84 and 86) forming the same image pattern (number four) as the image pattern that should be included in the image Ic(4) and dummy image pattern parts formed by the portion 85 and the portion 87.
Therefore, the image Ia(4) has an image pattern representing alphabet H, and the image Ib(4) has an image pattern representing number nine. Thereby, the image pattern included in the image Ia(4) and the image Ib(4) are set to different image patterns from the image pattern that is included in the image Ic(4).

When generating the image Ic(5) representing number "five", as shown in FIG. 8a, the low density part (image pattern part) of the image Ia(5) is formed by rectangular pattern portions (i.e. portions 81, 84, 85, 86 and 87) forming the same image pattern (number five) as the image pattern that should be included in the image Ic(5) and a dummy image pattern part formed by the portion 83. Also, as shown in FIG. 8b, the low density part (image pattern part) of the image Ib(5) is formed by rectangular pattern portions (i.e. portions 81, 84, 85, 86 and 87) forming the same image pattern (number five) as the image pattern that should be included in the image Ic(5) and a dummy image pattern part formed by the portion 82.
Therefore, the image Ia(5) has an image pattern representing number nine, and the image Ib(5) has an image pattern representing number six. Thereby, the image patterns included in the image Ia(5) and the image Ib(5) are set to different image patterns from the image pattern that is included in the image Ic(5).

When generating the image Ic(6) representing number "six", as shown in FIG. 9a, the low density part (image pattern part) of the image Ia(6) is formed by rectangular pattern portions (i.e. portions 81, 82, 84, 85, 86 and 87) forming the same image pattern (number six) as the image pattern that should be included in the image Ic(6) and a dummy image pattern part formed by the portion 83. Also, as shown in FIG. 9b, the low density part (image pattern part) of the image Ib(6) is formed by rectangular pattern portions (i.e. portions 81, 82, 84, 85, 86 and 87) forming the same image pattern (number six) as the image pattern that should be included in the image Ic(6).
Therefore, the image Ia(6) has an image pattern representing number eight, and the image Ib(6) has an image pattern representing number six. Thereby, the image pattern included in the image Ia(6) is set to a different image pattern from the image pattern that is included in the image Ic(6).

When generating the image Ic(7) representing number "seven", as shown in FIG. 10a, the low density part (image pattern part) of the image Ia(7) is formed by rectangular pattern portions (i.e. portions 83, 84, and 85) forming the same image pattern (number seven) as the image pattern that should be included in the image Ic(7) and dummy image pattern parts formed by the portion 81 and the portion 82. Also, as shown in FIG. 10b, the low density part (image pattern part) of the image Ib(7) is formed by rectangular pattern portions (i.e. portions 83, 84, and 85) forming the same image pattern (number seven) as the image pattern that should be included in the image Ic(7) and dummy image pattern parts formed by the portion 86 and the portion 87.
Therefore, the image Ia(7) has an image pattern representing a diagram of upside down alphabet U, and the image Ib(7) has an image pattern representing number three. Thereby, the image patterns included in the image Ia(7) and the image Ib(7) are set to different image patterns from the image pattern that is included in the image Ic(7).

When generating the image Ic(8) representing number "eight", as shown in FIG. 11a, the low density part (image pattern part) of the image Ia(8) is formed by rectangular pattern portions (i.e. portions 81, 82, 83, 84, 85, 86 and 87) forming the same image pattern (number eight) as the image pattern that should be included in the image Ic(8). Also, as shown in FIG. 11b, the low density part (image pattern part) of the image Ib(8) is formed by rectangular pattern portions (i.e. portions 81, 82, 83, 84, 85, 86 and 87) forming the same image pattern (number eight) as the image pattern that should be included in the image Ic(8).
Therefore, the image Ia(8) has an image pattern representing number eight, and the image Ib(8) has an image pattern representing number eight.

When generating the image Ic(9) representing number "nine", as shown in FIG. 12a, the low density part (image pattern part) of the image Ia(9) is formed by rectangular pattern portions (i.e. portions 81, 83, 84, 85, 86 and 87) forming the same image pattern (number nine) as the image pattern that should be included in the image Ic(9) and a dummy image pattern part formed by the portion 82. Also, as shown in FIG. 12b, the low density part (image pattern part) of the image Ib(9) is formed by rectangular pattern portions (i.e. portions 81, 83, 84, 85, 86 and 87) forming the same image pattern (number nine) as the image pattern that should be included in the image Ic(9).
Therefore, the image Ia(9) has an image pattern representing number eight, and the image Ib(9) has an image pattern representing number nine. Thereby, the image pattern included in the image Ia(9) is set to a different image pattern from the image pattern that is included in the image Ic(9).

In the above examples, regarding the images Ic(n) representing numbers 0, 1, 3, 4 and 6 to 9, the image pattern part of the image Ia(n) is formed in accordance with a first rule. In this rule, to a rectangular pattern portion forming the low density part (image pattern part) of the image Ic(n), a dummy image pattern part is added. Here, the dummy image pattern part is formed by rectangular pattern portions not forming the low density part and is selected among the four portions 81, 82, 83 and 84 extending in a longitudinal direction. Here, when there is no selectable rectangular pattern portion among the four portions 81, 82, 83 and 84, no dummy image pattern part is added.

Also, regarding the images Ic(n) representing numbers 0, 1, 3, 4 and 6 to 9, the image pattern part of the image Ib(n) is formed in accordance with a second rule. In this rule, a rectangular pattern portion forming the low density part (image pattern part) of the image Ic(n) is added by a dummy image pattern part. Here, the dummy image pattern part is formed by rectangular pattern portions not forming the low density part and is selected among the three portions 85, 86, and 87 extending in a lateral direction. Here, when there is no selectable rectangular pattern portion among the three portions 85, 86, and 87, no dummy image pattern part is added.

On the other hand, as to the images Ic(n) representing numbers 2 and 5, the image pattern parts of both the image Ia(n) and the image Ib(n) are formed in accordance with the first rule.

The above described rules for forming the image Ia(n) and the image Ib(n) are only the examples. Both the image Ia(n) and the image Ib(n) may be formed in accordance with the second rule. The image Ia(n) may be formed in accordance with the second rule and the image Ib(n) may be formed in accordance with the first rule. Further, other rule for forming the image Ia(n) and the image Ib(n) may be adopted.

When the above-mentioned image Ia(n) and image Ib(n) displayed on the panel 1 and the panel 2 respectively are observed from within a predetermined angular range with respect to the front surface of the panel 1, the image Ia(n) displayed on the panel 1 and the image Ib(n) displayed on the panel 2 overlap each other. Here, the predetermined angular range becomes a narrow one. For example, the angular range may be the range which the image Ia(n) and the image Ib(n) overlap each other only when observed by user of the display apparatus from a substantially front side of the panel 1.

Therefore, as shown in FIGS. 3c to 12c, the low density part (image pattern part) of the image Ic(n) is formed by an overlapping area of the low density parts (image pattern parts) of the image Ia(n) and the image Ib(n). The dummy image pattern part included in the image Ia(n) overlaps the background part of the image Ib(n) which forms the high density part of the image Ic(n). Also, the dummy image pattern part included in the image Ib(n) overlaps the background part of the image Ia(n) which forms the high density part of the image Ic(n). Accordingly, the dummy image pattern part is not visible from within the predetermined angular range, and the high density part (background part) of the image Ic(n) is formed by the whole high density part (background part) of the image Ia(n) and the image Ib(n). As a result, the image Ic(n) is generated by the image Ia(n) and the image Ib(n). At this time, the image Ia(n) and the image Ib(n) are not viewed individually.

In contrast, when the image is observed from outside the predetermined angular range with respect to the front surface of the panel 1, the image Ia(n) and the image Ib(n) are shifted from each other. This is because the liquid crystals on the panel 1 side and the liquid crystals on the panel 2 side are arranged so as to be spaced apart from each other by the thickness dimensions of the glass plate and the spacer 41.

Therefore, when the image is observed from outside the predetermined angular range, the dummy image pattern part included in the image Ia(n) hardly overlaps the background part of the image Ib(n), and the dummy image pattern part included in the image Ib(n) hardly overlaps the background part of the image Ia(n). Accordingly, the image Ia(n) and the image Ib(n) are viewed individually from outside the predetermined angular range, and therefore, the image Ic(n) cannot be viewed. Here, except the image Ia(8) and the image Ib(8), an image pattern included in at least either of the image Ia(n) and the image Ib(n) is set to a different image pattern from the image pattern that will be included in the image Ic(0). Therefore, from outside the predetermined angular range, it is difficult to recognize what kind of image the image Ic(n) is like.

Accordingly, even when a person other than the user of the display apparatus 100 observes the image from his (or her) behind, since the person other than the user can view the image only from outside the predetermined angular range with respect to the front surface of the panel 1, the person other than the user can view only the image Ia(n) and the image Ib(n) individually. Therefore, according to the display apparatus 100 described above, the image Ic(n) is prevented from being viewed by the person other than the user. Therefore, even when a highly confidential composite image is displayed on the display apparatus 100, the composite image is hardly recognized by the person other than the user, and as a result, confidentiality of the composite image is maintained.

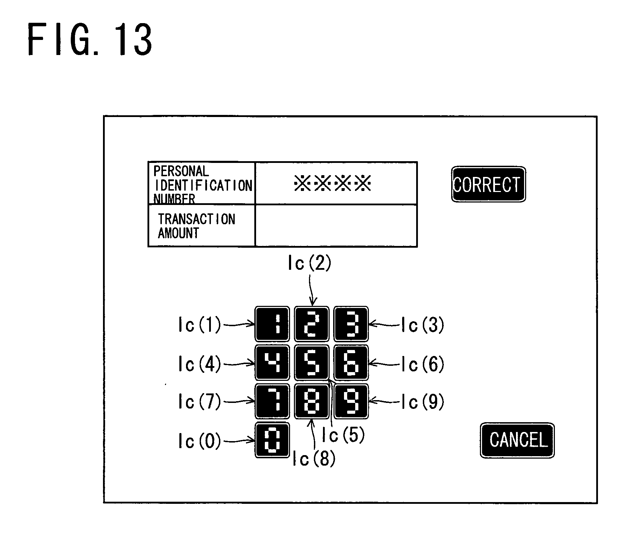

FIG. 13 shows an example of an image displayed when the display apparatus 100 is applied to an ATM (Automated Teller Machine). As shown in FIG. 13, when a user of the ATM inputs an identification number, the apparatus 100 can display the images Ic(0) to Ic(9), representing respective numbers 0 to 9, arranged in matrix.

A light-transmitting input touch panel may be installed on the front surface of the panel 1 so as to cover the front surface. Thereby, the user of the ATM can input numbers by touching areas which overlap the images Ic(0) to Ic(9) of the input touch panel.

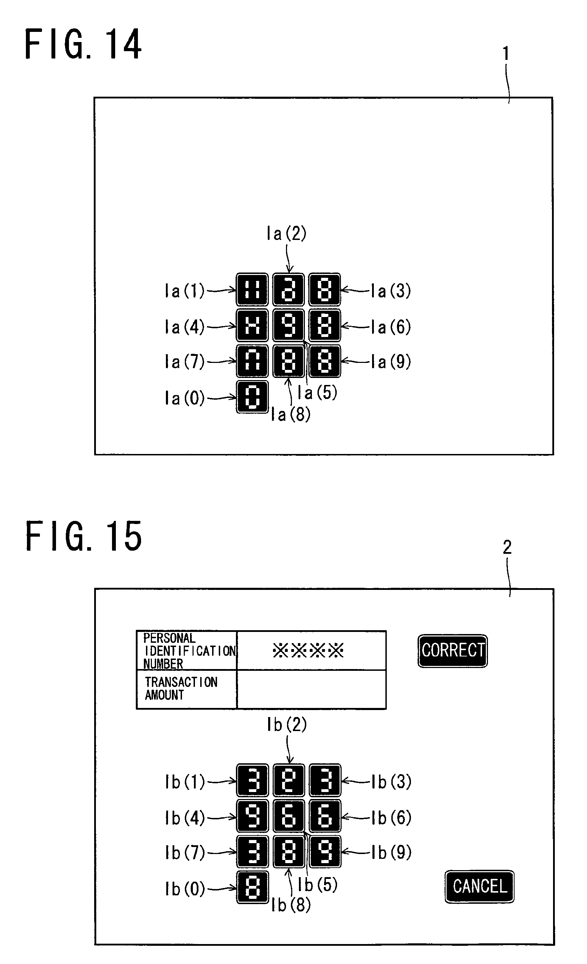

In order to generate the images Ic(0) to Ic(9) shown in FIG. 13, the images Ia(0) to Ia(9) are arranged in matrix and displayed on the panel 1 as shown in FIG. 14. Also, as shown in FIG. 15, the images Ib(0) to Ib(9) are arranged on the panel 2 similarly to the images Ia(0) to Ia(9) and displayed. Here, the images Ia(0) to Ia(9) and the images Ib(0) to Ib(9) are displayed on the panels 1, 2 so that the images Ia(0) to Ia(9) and the images Ib(0) to Ib(9) overlap each other only when the user of the ATM views the images from the substantially front side of the panel 1.

When a user of the ATM inputs an identification number, the user views the images Ic(0) to Ic(9) from the substantially front side of the panel 1. On the other hand, a person other than the user of the ATM who observes the images from behind can observe the images only from an oblique direction with respect to the front surface of the panel 1. Thus, the person other than the user can only view the images Ia(0) to Ia(9) shown in FIG. 14 and the images Ib(0) to Ib(9) shown in FIG. 15 individually. Accordingly, when a user of the ATM inputs an identification number by operating the input touch panel, even if a person other than the user looks at the input operation, the person other than the user cannot recognize which number the user inputs. Therefore, confidentiality of the identification number can be maintained.

Among the images Ia(0) to Ia(9), the images Ia(3), Ia(6), Ia(8), and Ia(9) include the image patterns which are formed so as to represent the number "eight". Also, among the images Ib(0) to Ib(9), the images Ib(1), Ib(3), and Ib(7) include the image patterns which are formed so as to represent the number "three". The images Ib(5) and Ib(6) include the image patterns which are formed so as to represent the number "six". The images Ib(8) and Ib(0) include the image patterns which are formed so as to represent the number "eight". Lastly, the images Ib(4) and Ib(9) include the image patterns which are formed so as to represent the number "nine".

Therefore, even when the images Ia(0) to Ia(9) and the images Ib(0) to Ib(9) are viewed individually by a person other than the user, the person other than the user cannot guess the numbers represented by the images Ic(0) to Ic(9) generated by the images Ia(0) to Ia(9) and the images Ib(0) to Ib(9).

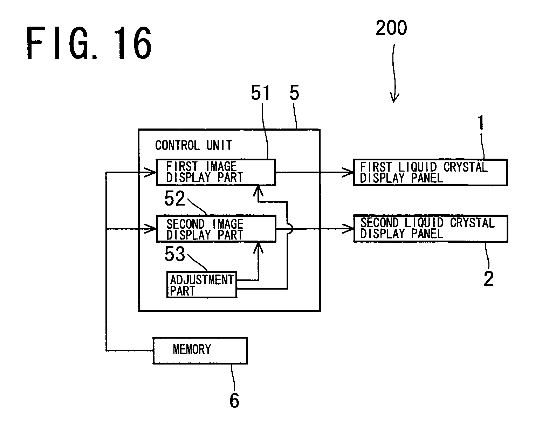

FIG. 16 is a block diagram showing a structure of a display apparatus 200 in accordance with a first modification of the present invention. As shown in FIG. 16, the control unit 5 may further include an adjustment part 53 for adjusting a display position of the image Ia(n) which is displayed on the panel 1 by the first image display part 51 and a display position of the image Ib(n) which is displayed on the panel 2 by the second image display part 52.

With the adjustment part 53, information regarding the predetermined angular direction in which the image Ia(n) and the image Ib(n) overlap each other is inputted thereon. The adjustment part 53 adjusts the display position of the image Ia(n) and the display position of the image Ib(n) based on the inputted information so that the image Ia(n) and the image Ib(n) overlap in the predetermined angular direction with respect to the front surface of the panel 1.

According to the display apparatus 200 described above, it is possible to adjust the predetermined angular direction with which the image Ic(n) is viewable. For example, a user of the ATM may input the information of the predetermined angular direction into the adjustment part 53 by operating the input touch panel in order to adjust the predetermined angular direction. Also, such information may be recorded in a credit card or debit card and the information read from the card may be inputted to the adjustment part 53 in order to adjust the predetermined angular direction. Thereby, the predetermined angular direction can be changed depending on various user of the ATM.

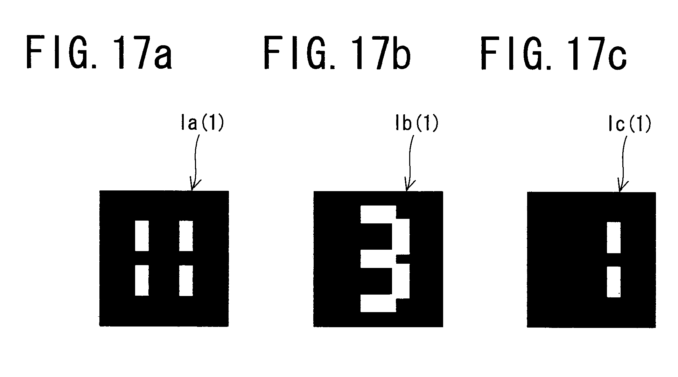

FIGS. 17a to 17c show a first image, a second image and a predetermined composite image displayed in a display apparatus 300 in accordance with a second modification of the present invention, respectively. In particular, FIGS. 17a to 17c show a first image Ia(1), a second image Ib(1) and a predetermined composite image Ic(1) respectively.
As shown in FIG. 17b, the low density part (image pattern part) of the image Ib(1) may be displayed thickly on the panel 2. Specifically, a width dimension of the low density part (image pattern part) of the image Ib(1) displayed on the panel 2 is set to be larger than a width dimension of the low density part (image pattern part) of the image Ia(1) displayed on the panel 1. The similar setting may be adopted for other second images Ib(0) and Ib(2) to Ib(9).

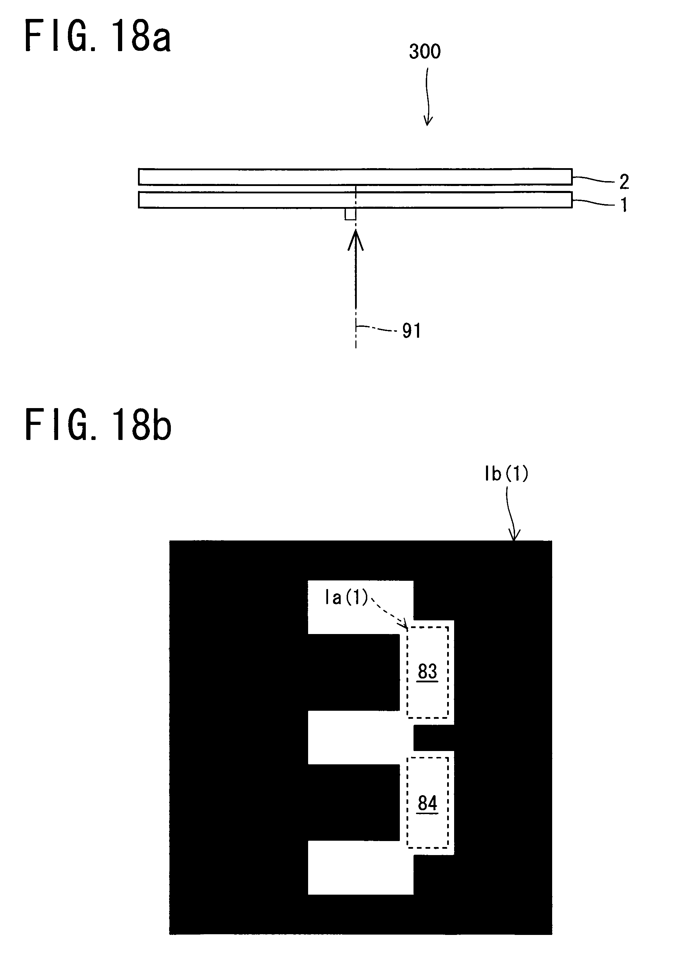

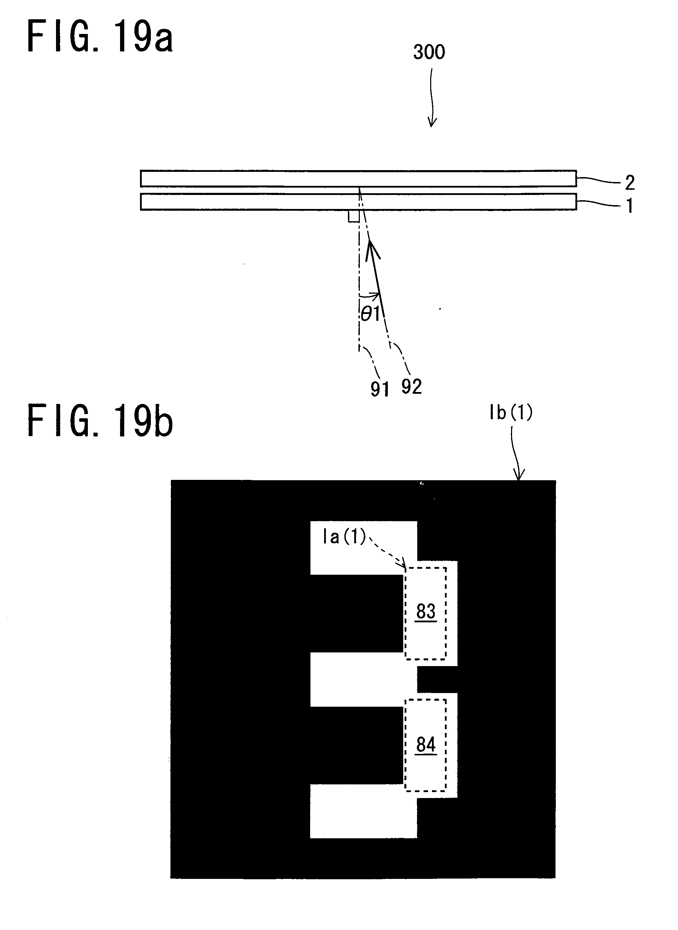

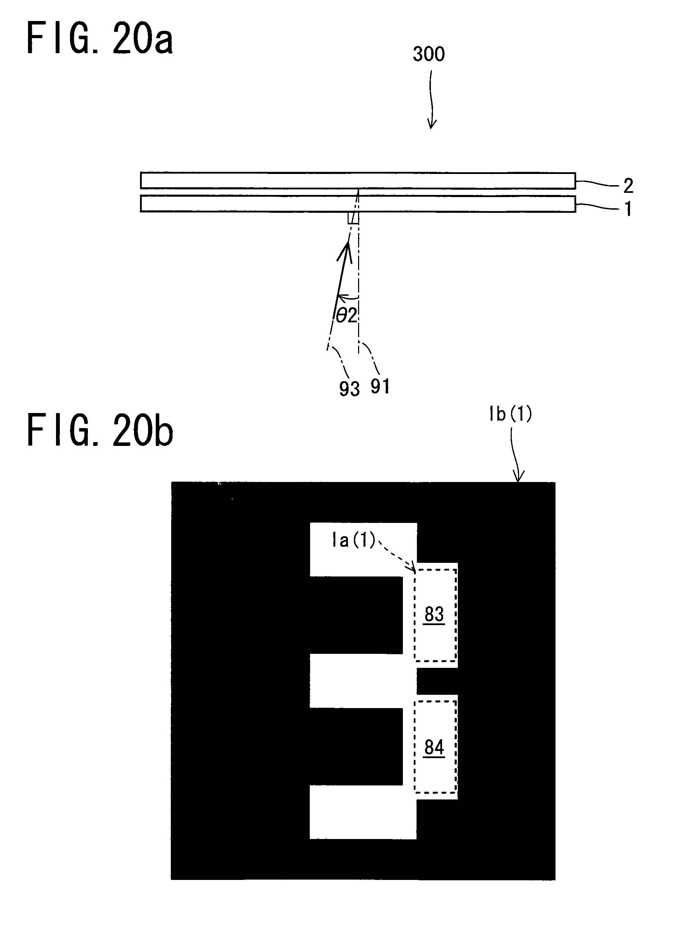

Thereby, the image Ic(n) can be viewed from within the predetermined angular range with respect to the front surface of the panel 1. That is, in all of the cases: (1) when the image is viewed from a direction 91 that is perpendicular to the front surface of the panel 1 as shown in FIG. 18a; (2) when the image is viewed from a direction 92 that is inclined to the right side by a predetermined angle θ1 from the perpendicular direction 91 as shown in FIG. 19a; and (3) when the image is viewed from a direction 93 that is inclined to the left side by a predetermined angle θ2 from the perpendicular direction 91 as shown in FIG. 20a, as shown in FIGS. 18b to 20b, the portion 83 located at the right upper position and the portion 84 located at the right lower position out of the low density part (image pattern part) of the image Ia(1), wherein the portions 83 and 84 form the low density part of the image Ic(1), overlap the low density part (image pattern part) of the image Ib(1).

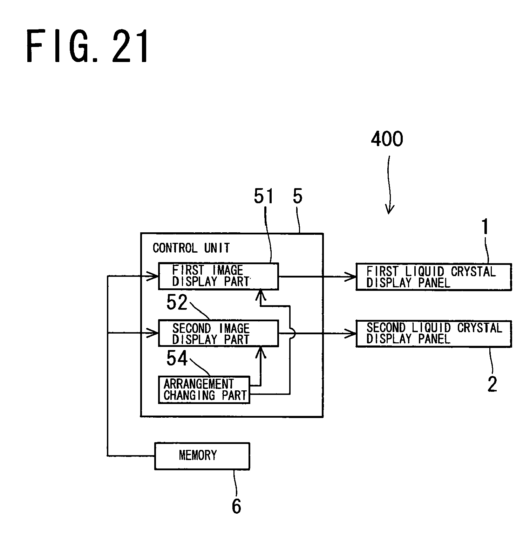

FIG. 21 is a block diagram showing a structure of a display apparatus 400 in accordance with a third modification of the present invention. As shown in FIG. 21, the control unit 5 may further include an arrangement changing part 54 for changing an arrangement state of the first images Ia(0) to Ia(9) which are displayed on the panel 1 by the first image display part 51 and an arrangement state of the images Ib(0) to Ib(9) displayed on the panel 2 by the second image display part 52 every time these images are displayed.

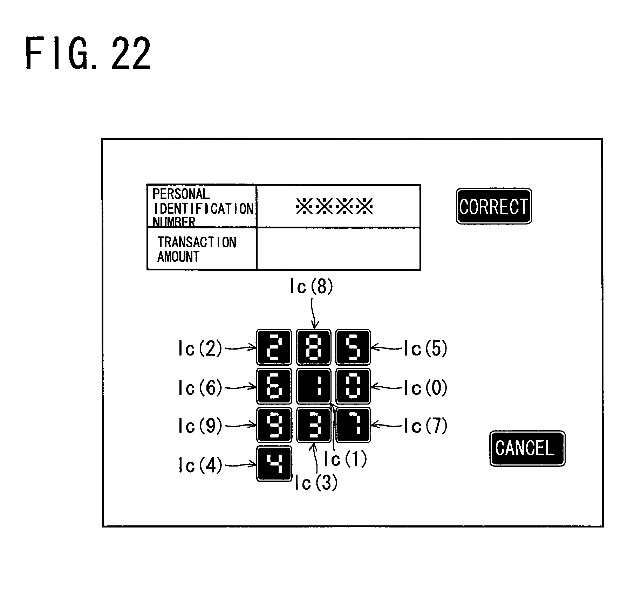

Thereby, when the display apparatus 400 is employed in an ATM, it is possible to change an arrangement state of the images Ic(0) to Ic(9) from original arrangement state thereof every time these images are displayed. For example, the arrangement state of the images Ic(0) to Ic(9) shown in FIG. 13 can be change to the arrangement state shown in FIG. 22. Therefore, every time the images for inputting an identification number are displayed in the ATM, the user should perform a different input operation to the ATM each time. Therefore, even if a person other than the user looks at the input operation of the user of the ATM, the person other than the user cannot guess the numbers of the identification number from the input operation.

The present invention is not limited to the foregoing embodiment in structure but can be modified variously by one skilled in the art without departing from the spirit of the invention as set forth in the appended claims. For example, the image pattern of the predetermined composite image generated by the first image displayed on the panel 1 and the second image displayed on the panel 2 may represent not only a number, but also a letter, a diagram or the like. Further, the appearance of the image pattern part, the background part, the dummy image pattern part, and the rectangular pattern portion are not limited to those of the above embodiments.

In the display apparatus described above, appearance, display position or the like of the dummy image pattern part included in the first image and the second image may be changed every time the first image and the second image are displayed on the panel 1 and panel 2.

In the display apparatus described above, the low density part (image pattern part) of the first image and the low density part (image pattern part) of the second image may be displayed with a color such as yellow or with some designs (texture etc.). Thereby, the low density part (image display pattern part) of the predetermined composite image produced by the first image and the second image is also displayed with a color or design, and therefore, the image pattern of the predetermined composite image is easily viewed even when the light is leaked to the high density part (background part).

The structures of the above described display apparatus can also be employed in a display apparatus including three or more liquid crystal display panels.

## Claims

1. A display apparatus comprising:
a first liquid crystal display panel (1);
a second liquid crystal display panel (2) arranged on a rear side of the first liquid crystal display panel; and
control means for controlling display of an image on the first liquid crystal display panel and the second liquid crystal display panel,
the image display means including:
a first image display part (51) that causes a first image comprising a low density part having a low density value and a high density part having a higher density value than the low density part to be displayed on the first liquid crystal display panel (1); and
a second image display part (52) that causes a second image comprising a low density part having a low density value and a high density part having a higher density value than the low density part to be displayed on the second liquid crystal display panel (2),
wherein when an image is observed from within a predetermined angular range with respect to a front surface of the first liquid crystal display panel (1), the first image displayed on the first liquid crystal display panel (1) and the second image displayed on the second liquid crystal display panel (2) overlap each other to produce a predetermined composite image.

2. The display apparatus according to claim 1, wherein a low density part of the predetermined composite image is formed by an overlapping area of the low density parts of the first image and the second image.

3. The display apparatus according to claim 1 or 2, wherein the first image and the second image each comprise an image pattern part which is formed by the low density part and includes a predetermined image pattern, and a background part which is formed by the high density part and surrounds the image pattern part, and the image pattern part of at least one of the first image and the second image includes a dummy image pattern part which does not form the predetermined composite image, and the dummy image pattern part overlaps the background part of the first image or the second image.

4. The display apparatus according to any one of claims 1 to 3, wherein the apparatus further includes a memory (6) which records the first image and the second image which produce the predetermined composite image and are correlated with each other, and the first image display part (51) and the second image display part (52) read the first image and the second image which are correlated with each other from the memory (6) to display the first image and the second image on the first liquid crystal display panel (1) and the second liquid crystal display panel (2), respectively.

5. The display apparatus according to one of claims 1 to 4, wherein the control means further includes an adjustment part (53) for adjusting a display position of the first image which is displayed on the first liquid crystal display panel (1) by the first image display part (51) and a display position of the second image which is displayed on the second liquid crystal display panel (2) by the second image display part (52), and the adjustment part (53) adjusts the display position of the first image and the display position of the second image so that the first image and the second image overlap each other in a predetermined angular direction with respect to the front surface of the first liquid crystal display panel (1).

6. The display apparatus according to one of claims 1 to 5, wherein the low density part of the second image has a larger width dimension than that of the low density part of the first image.
